Europäisches Patentamt

European Patent Office

Office européen des brevets

(19)

(11) Veröffentlichungsnummer: **0 543 203 B1**

(12) **EUROPÄISCHE PATENTSCHRIFT**

(45) Veröffentlichungstag der Patentschrift: **09.08.95**

(51) Int. Cl.⁶: **B60L 9/30**

(21) Anmeldenummer: **92118710.0**

(22) Anmeldetag: **02.11.92**

(54) **Verfahren und Schaltung zur Umformung elektrischer Energie.**

(30) Priorität: **21.11.91 DE 4138256**

(43) Veröffentlichungstag der Anmeldung:
**26.05.93 Patentblatt 93/21**

(45) Bekanntmachung des Hinweises auf die
Patenterteilung:
**09.08.95 Patentblatt 95/32**

(84) Benannte Vertragsstaaten:
**AT DE ES IT**

(56) Entgegenhaltungen:
**EP-A- 0 370 207**
**FR-A- 2 126 568**

**ELEKTRISCHE BAHNEN, Bd. 85, Nr. 7, 1987,
MUNCHEN, DE, Seiten 205 - 217; WOLFGANG
RUNGE: 'Bahnantriebssysteme mit synchronen Fahrmotoren'**

(73) Patentinhaber: **ASEA BROWN BOVERI AG**
**Haselstrasse 16**
**CH-5401 Baden (CH)**

(72) Erfinder: **Ketteler, Karl-Hermann, Dr.**
**Lärchenweg 10**
**CH-5312 Döttingen (CH)**

(74) Vertreter: **Rzehak, Herbert et al**
**Asea Brown Boveri AG**
**Abteilung TEI-Immaterialgüterrecht**
**Wiesenstrasse 26**
**CH-5401 Baden (CH)**

**Beschreibung**

TECHNISCHES GEBIET

Bei der Erfindung wird ausgegangen von einem Verfahren und einer Schaltung zur Umformung elektrischer Energie nach dem Oberbegriff der Patentansprüche 1 und 4.

STAND DER TECHNIK

Mit dem Oberbegriff der Patentansprüche 1 und 4 nimmt die Erfindung auf einen Stand der Technik Bezug, wie er aus dem Konferenzbericht: 4th European Conference on Power Electronics and Application, S. 4-632 - 4-637, Firenze, September 3 - 6, 1991, veröffentlicht durch: Litografia GEDA, Via Villa Glori, 6, 10133 Torino - Italy, bekannt ist. Dort wird von W. Geissler und F. Unger-Weber unter dem Titel: "MODELLING THE THREE PHASE PROPULSION SYSTEM OF A MODERN MULTISYSTEM-LOCOMOTIVE" ein 2Systemkonzept für Bahnantriebe angegeben, das für eine Netz-Wechselspannung von 15 kV, 16 2/3 Hz, und eine Netz-Gleichspannung von 3 kV ausgelegt ist. Die Antriebsmaschinen werden über einen oder 2 Wechselrichter aus einem oder 2 Gleichspannungszwischenkreisen gespeist. Im Falle des Wechselstromnetzes wird der Gleichspannungszwischenkreis über 2 parallelgeschaltete 4Quadrantensteller gespeist, im Falle des Gleichspannungsnetzes über 2 in Reihe geschaltete Gleichspannungssteller oder über Hochsetz-/Tiefsetzsteller, wobei jeweils mindestens 2 Stellerdrosseln vorgesehen sind.

Bei Hochleistungslokomotiven können diese Stellerdrosseln eine Masse von mehreren Tonnen aufweisen, viel Platz in Anspruch nehmen und Kosten in Höhe von mehreren 10 000 Schweizer Franken verursachen.

Aus der EP-A-0 370 207 ist ein Elektrofahrzeug bekannt, das von einem Mehrphasen-Asynchronmotor angetrieben wird, dessen Primärwicklung aus zwei an je einen Stromrichter angeschlossenen Teilwicklungen besteht. Diese Stromrichter sind gleichspannungsseitig in Reihe oder parallel sohaltbar, abhängig von der Spannung des speisenden Gleichspannungsnetzes.

DARSTELLUNG DER ERFINDUNG

Die Erfindung, wie sie in den Patentansprüchen 1 und 4 definiert ist, löst die Aufgabe, ein Verfahren und eine Schaltung zur Umformung elektrischer Energie der eingangs genannten Art derart weiterzuentwickeln, dass die Umformung mit einem geringeren technischen Aufwand möglich wird.

Ein wesentlicher Vorteil der Erfindung besteht darin, dass keine Stellerdrosseln benötigt werden.

Es sind nur wenig kritische Umschalthandlungen erforderlich. Kritische Umschalthandlungen sind in diesem Zusammenhang Schalthandlungen innerhalb des Gleichspannungszwischenkreises des Umrichters, da die Schalter dort sehr niederinduktiv montiert sein müssen.

Die Erfindung stützt sich auf 2Punkt-Schaltungstechnik und benötigt keine Hochsetz- oder Tiefsetzsteller mit den dazugehörigen Stellerdrosseln.

Bei der Umformung elektrischer Energie aus Gleichspannungsquellen ist nur eine einmalige Energieumwandlung erforderlich.

Gemäss einer vorteilhaften Ausgestaltung der Erfindung ergibt sich bei einer Umformung elektrischer Energie aus Gleichspannungsquellen eine Verringerung von Netzstromoberschwingungen und, infolge einer gegenseitigen Phasenverschiebung der Ausgangsspannung, eine Reduzierung von Motorzusatzverlusten sowie von Motorpendelmomenten.

KURZE BESCHREIBUNG DER ZEICHNUNGEN

Die Erfindung wird nachstehend anhand von Ausführungsbeispielen erläutert. Es zeigen:

Fig. 1    eine Mehrsystem-Antriebsschaltung mit einem Umrichter und einer Maschine mit 2 Teilwicklungen je Wechselstromphase in Sternschaltung,

Fig. 2    eine Maschine mit 2 Teilwicklungen je Wechselstromphase in Dreieckschaltung und

Fig. 3    eine Mehrsystem-Antriebsschaltung mit 2 Umrichtern und 2 Maschinen mit je 2 Teilwicklungen je Wechselstromphase in Sternschaltung.

WEGE ZUR AUSFÜHRUNG DER ERFINDUNG

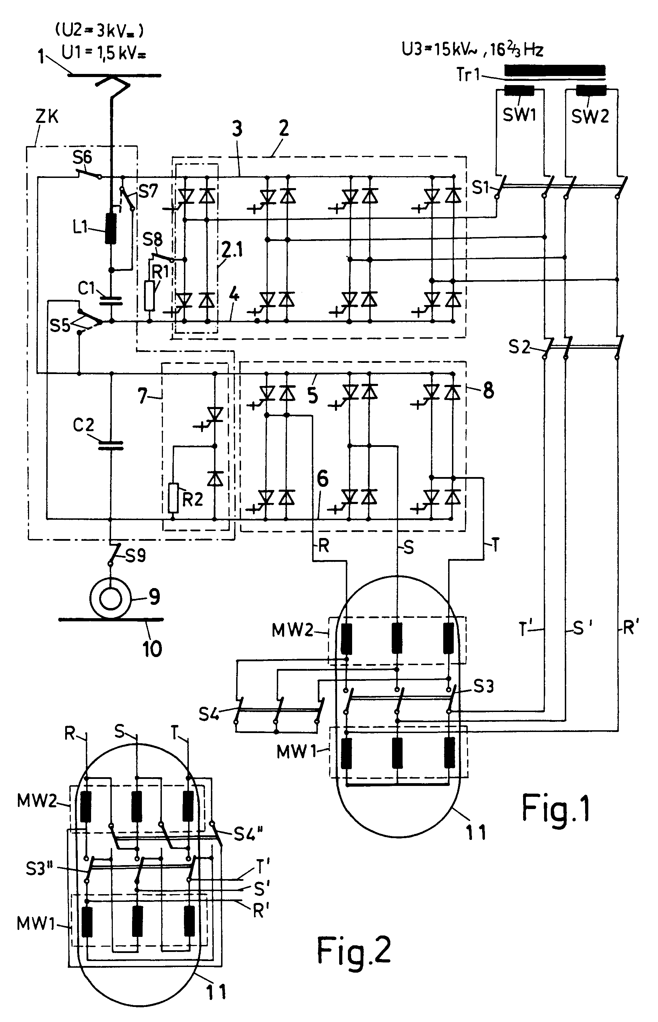

In Fig. 1 ist mit (1) eine Energiequelle bzw. ein Gleichspannungsnetz mit einer 1. Gleichspannung (U1) von 1,5 kV bezeichnet, das über einen Stromabnehmer und eine Eingangsfilterdrossel (L1) einen Gleichspannungszwischenkreis (ZK) eines Umrichters (2, ZK, 8) speist. Die Eingangsfilterdrossel (L1) ist beidseitig über einen Umschalter (S7) mit einem Pluspol (3) eines Gleichrichters bzw. 1. Stromrichters (2) verbindbar und über einen 1. Zwischenkreiskondensator (C1) mit einem Minuspol (4) des 1. Stromrichters (2).

Der 1. Stromrichter (2) besteht aus 4 gleichstromseitig parallelgeschalteten 2Punkt-Zweigpaaren mit je 2 in Reihe geschalteten GTO-Thyristoren und dazu antiparallelen Dioden. Die beiden linken 2Punkt-Zweigpaare sind über einen 1. Schalter (S1) mit einer 1. Sekundärwicklung (SW1) eines Netztransformators (Tr1) verbindbar, der primärseitig an ein nicht dargestelltes Wechselspannungsnetz mit 15 kV Wechselspannung und 16 2/3 Hz angeschlossen ist. Die beiden rechten 2Punkt-Zweigpaare des 1. Stromrichters (2) sind über den 1. Schalter (S1) mit einer 2. Sekundärwicklung (SW2) des Netztransformators (Tr1) verbindbar. Das mit (2.1) bezeichnete linke 2Punkt-Zweigpaar des 1. Stromrichters (2) wird beim Bremsbetrieb eines Wechselstromverbrauchers bzw. Motors bzw. einer elektrischen Maschine (11) in Verbindung mit einem Schalter (S8) und einem Bremswiderstand (R1) als Bremsenergiesteller bzw. als Momentanspannungsbegrenzer verwendet, um etwaige unerwünschte Überspannungen zu vermeiden.

Der 1. Stromrichter (2) ist über den Gleichspannungszwischenkreis (ZK) mit einem Wechselrichter bzw. 2. Stromrichter (8) parallelgeschaltet, wobei der Pluspol (3) des 1. Stromrichters (2) über einen 6. Schalter (S6) mit einem Pluspol (5) des 2. Stromrichters (8) und der Minuspol (4) des 1. Stromrichters (2) über einen 5. Schalter bzw. Umschalter (S5) mit einem Minuspol (6) des 2. Stromrichters (8) verbunden ist. Parallel zum 2. Stromrichter (8) ist im Gleichspannungszwischenkreis (ZK) ein 2. Zwischenkreiskondensator (C2) und ein Bremssteller mit einem Bremswiderstand (R2) bzw. ein Momentanspannungsbegrenzer (7) geschaltet, um etwaige unerwünschte Überspannungen zu vermeiden und über den Bremswiderstand (R2) abzubauen. Der Minuspol (6) des 2. Stromrichters (8) ist über einen Schalter (S9) und eine oder mehrere Fahrzeugachsen (9) mit einer Schiene (10) verbunden und geerdet.

Die elektrische Maschine (11) weist eine 3strängige Motor- bzw. Statorwicklung auf, die in 2 symmetrische, 3strängige Wicklungssysteme bzw. in 1. und 2. Teilwicklungen (MW1, MW2) mit jeweils gleicher Windungszahl aufgeteilt ist. Die beiden Teilwicklungen (MW1, MW2) sind durch einen 3. Schalter (S3) galvanisch voneinander getrennt. Die mit dem 3. Schalter (S3) verbundenen Enden der 3 1. Teilwicklungen (MW1) sind über Drehstromleitungen (R', S', T') und einen 2. Schalter (S2) mit den Wechselstromausgängen der 3 rechten 2Punkt-Zweigpaare des 1. Stromrichters (2) verbunden, während die jeweils anderen Enden der 1. Teilwicklungen (MW1) miteinander verbunden sind. Die mit dem 3. Schalter (S3) verbundenen Enden der 3 2. Teilwicklungen (MW2) sind über einen 4. Schalter (S4) miteinander verbunden, während die jeweils anderen Enden der 2. Teilwicklungen (MW2) je Drehstromleitung bzw. je Wechselstromphase (R, S, T) an die Wechselstromausgänge des 2. Stromrichters (8) angeschlossen sind.

Die dargestellten Schaltpositionen mit gleichspannungsseitig parallelgeschaltetem 1. Stromrichter (2) und 2. Stromrichter (8) entsprechen einer Speisung der in Stern geschalteten elektrischen Maschine (11) aus dem 1,5-kV-Gleichspannungsnetz (1). Sofern das Gleichspannungsnetz (1) nicht in der Lage ist, zurückgespeiste Bremsenergie aufzunehmen, muss diese Energie in den Bremswiderständen (R1, R2) in Wärme umgewandelt werden. In dieser Schaltung dienen die Zwischenkreiskondensatoren (C1) und (C2) in Parallelschaltung als Stützkondensatoren zur Glättung der Spannung im Gleichspannungszwischenkreis (ZK). Zu diesem Zweck sind die Schalter (S5, S6, S7) induktivitätsarm zu montieren.

Die elektrische Maschine (11) kann anstatt in Sternschaltung auch in Dreieckschaltung betrieben werden, vgl. Fig. 2. Hierbei sind die 3. und 4. Schalter (S3, S4) durch Umschalter (S3'', S4'') ersetzt.

Soll nun von der 1,5-kV-Gleichspannung auf ein Gleichspannungsnetz (1) mit einer 2. Gleichspannung (U2) von 3 kV umgeschaltet werden, so wird der Stromabnehmer eingezogen und/oder ein nicht dargestellter Hauptschalter in der Speisestromzuleitung geöffnet. In stromlosem Zustand wird der Schalter (S6) geöffnet und der Umschalter (S5) in seine gestrichelt dargestellte Position umgeschaltet. Dadurch werden der 1. Stromrichter (2) und der 2. Stromrichter (8) gleichspannungsseitig in Reihe geschaltet. Anschliessend kann der Stromabnehmer wieder ans Gleichspannungsnetz (1) angelegt und/oder der Hauptschalter eingeschaltet werden. In dieser Schaltung dienen die Zwischenkreiskondensatoren (C1, C2) in Reihenschaltung als Stützkondensatoren zur Glättung der Spannung im Gleichspannungszwischenkreis (ZK).

Soll auf das Wechselspannungsnetz umgeschaltet werden, so sind in stromlosem Zustand, mit Bezug auf die in Fig. 1 dargestellte Schaltposition für 1,5 kV Gleichspannung, die Schalter (S1, S3) zu schliessen, die Schalter (S2, S4, S8) zu öffnen und der Umschalter (S7) in seine gestrichelt dargestellte Position umzuschalten. Der Schalter (S9) kann aus Gründen des Schutzes und der Fehlerdiagnose für die Hauptstromanlage ebenfalls geöffnet werden. Der Stromabnehmer am Gleichspannungsnetz (1) ist dabei eingezogen. Die beiden Teilwicklungen (MW1, MW2) der elektrischen Maschine (11) sind in Reihe geschaltet. Der bei Gleichspannungsbetrieb als Verbraucherstromrichter bzw. als Wechselrichter betriebene 1. Stromrichter (2) wird nun als Netzstromrichter bzw. als Gleichrichter betrieben. Die Eingangsfilterdrossel (L1) wirkt jetzt zusammen mit dem in Reihe geschalteten 1. Zwischenkreiskondensator (C1) als Saugkreis zum Kompensieren der pulsierenden Netzleistung. Der Saugkreis ist vorzugsweise auf die doppelte Netzfrequenz ausgelegt und nur bei einem 1phasigen Wechselspannungsnetz erforderlich.

Bei einer Speisung der elektrischen Maschine (11) aus einem Wechselspannungsnetz kann im Regelfall Bremsenergie ins Wechselspannungsnetz zurückgespeist werden, wobei der 2. Stromrichter (8) als Gleichrichter und der 1. Stromrichter (2) als Wechselrichter betrieben werden.

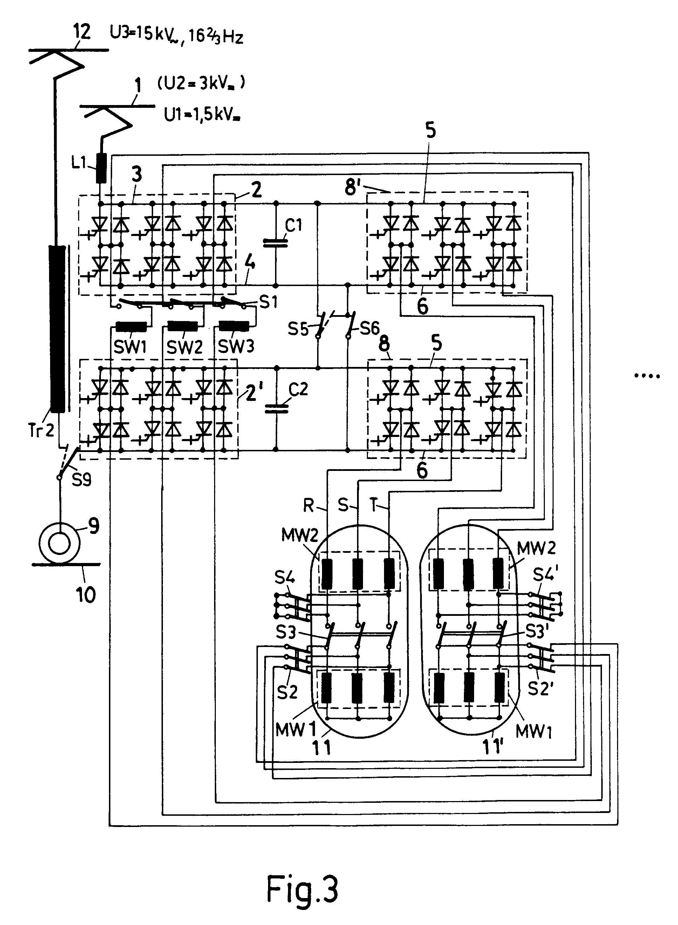

Fig. 3 zeigt eine Schaltungsanordnung für einen Einzelachsantrieb eines Fahrzeuges mit einem von einem Wechselspannungsnetz (12) mit einer Wechselspannung (U3) von 15 kV, 16 2/3 Hz, gespeisten Netztransformator (Tr2) mit 3 Sekundärwicklungen (SW1 - SW3) und 2 gleich aufgebauten elektrischen Maschinen (11, 11'), entsprechend derjenigen in Fig. 1. Gleiche Gegenstände sind gleich bezeichnet wie in Fig. 1. Die dargestellte Schaltposition entspricht wieder einer Speisung aus dem Gleichspannungsnetz (1) mit einer 1. Gleichspannung (U1) von 1,5 kV, wobei der Stromabnehmer zum Wechselspannungsnetz (12) eingezogen und der Schalter (S9) in seiner ausgezogen dargestellten Position ist.

Mit (2, 2') sind 2 1. Stromrichter und mit (8, 8') 2 2. Stromrichter bezeichnet. Die Stromrichter (2) und (8') bilden zusammen mit dem 1. Zwischenkreiskondensator (C1) einen 1. Umrichter, während die Stromrichter (2') und (8) zusammen mit dem 2. Zwischenkreiskondensator (C2) einen 2. Umrichter bilden. Aus Gründen der Übersichtlichkeit sind Bremssteller bzw. Momentanspannungsbegrenzer (7, 2.1) mit ihren zugehörigen Widerständen (R1, R2) gemäss Fig. 1 weggelassen. Der Bremssteller (2.1) muss in dieser Schaltung aus einem separaten Bremszweig gebildet werden, der Schalter (S8) ist nicht erforderlich. Der Schalter (S7) zum Umschalten der Eingangsfilterdrossel (L1) als Saugkreisdrossel bei Speisung aus dem Wechselspannungsnetz (12) ist ebenfalls nicht dargestellt.

Die den 2., 3. und 4. Schaltern (S2, S3, S4) entsprechenden Schalter der 2. elektrischen Maschine (11') sind mit (S2', S3') und (S4') bezeichnet. Dabei sind die 1. und 2. Teilwicklungen (MW1, MW2) der elektrischen Maschine (11) wie in Fig. 1 angeschlossen, während die 1. Teilwicklungen (MW1) der elektrischen Maschine (11') über den Schalter (S2') an die Wechselstromanschlüsse des Stromrichters (2') und deren 2. Teilwicklungen (MW2) an die Wechselstromanschlüsse des Stromrichters (8') angeschlossen sind. Die 3 Sekundärwicklungen (SW1 - SW3) des Netztransformator (Tr2) sind einerseits an die Wechselstromanschlüsse des Stromrichters (2') und andererseits über den 1. Schalter (S1) an die Wechselstromanschlüsse des 1. Stromrichters (2) anschliessbar.

In der dargestellten Schaltposition für eine Speisung mit 1,5 kV Gleichspannung sind die beiden Umrichter gleichspannungsseitig über die Schalter (S5, S6) parallelgeschaltet.

Soll nun auf eine Speisung mit 3 kV Gleichspannung umgeschaltet werden, so ist der Umschalter (S5) in seine gestrichelt dargestellte Position umzuschalten und Schalter (S6) zu öffnen, wodurch die beiden Umrichter gleichspannungsseitig in Reihe geschaltet werden. Das Umschalten erfolgt wieder stromlos, wie es in Verbindung mit Fig. 1 erläutert wurde.

Soll auf eine Speisung aus dem Wechselspannungsnetz (12) umgeschaltet werden, so sind, mit Bezug auf die in Fig. 3 dargestellte Schaltposition, die Schalter (S1, S3, S3') zu schliessen, die Schalter (S2, S2', S4, S4') zu öffnen und Schalter (S9) in seine gestrichelt dargestellte Position umzuschalten. Auch hierbei erfolgt das Umschalten stromlos, bei eingezogenen Stromabnehmern bzw. geöffneten Hauptschaltern (nicht dargestellt).

Bei Speisung aus einem Gleichspannungsnetz (1) ist die symmetrische Leistungsaufteilung auf beide Teilzwischenkreise ohne regelungstechnische Eingriffe auf jeden Fall gewährleistet, da die beiden Teilwicklungen (MW1, MW2) beider Motoren (11, 11') jeweils den gleichen Läufer sowie das gleiche Luftspaltfeld sehen und deshalb vollkommen gleichberechtigt sind.

Wichtig ist, dass die Schalter (S5, S6, S7) sehr niederinduktiv montiert sind. Die übrigen Schalter können konstruktiv beliebig plaziert sein. Die Schalter können manuell, motorisch, pneumatisch oder hydraulisch betrieben sein.

Als steuerbare Ventile in den Stromrichtern (2, 2', 8, 8') und (7) werden Halbleiterschalter eingesetzt. Entsprechend dem Stand der heutigen Technik können z. B. GTO-Thyristoren oder Transistoren eingesetzt werden.

Wesentlich ist ferner die Spannungsumschaltung der Motorwicklung (MW1, MW2) durch Halbierung der Windungszahl und Verdoppelung der Wicklungsstränge.

Bei Wechselspannungsbetrieb beträgt die Zwischenkreisspannung 2,8 kV. Daraus ergibt sich eine bestimmte maximale Grundschwingungsklemmenspannung, für die der Motor (11, 11') ausgelegt werden muss.

Bei Gleichspannungsbetrieb beträgt in beiden Fällen die Teilzwischenkreisspannung 1,5 kV. Die Motorwicklung (MW1, MW2) muss deshalb in 2 symmetrische Wicklungssysteme halber Windungszahl aufgeteilt werden, die galvanisch getrennt sind, damit

- die Grundfeld-Luftspaltinduktion im Motor (11, 11') bei Gleich- und Wechselspannungsbetrieb in etwa gleich ist und

- keine unerwünschten Ausgleichströme zwischen den Wicklungsteilen fliessen.

Die 2 Wicklungssysteme sind im Motor (11, 11') um 30°/p versetzt sowie als 2p-polige Wicklungen ausgeführt, p = Polpaarzahl.

Durch die Anordnung von 2 x 3strängigen Wicklungen (MW1, MW2) werden die Motorpendelmomente im Motor erheblich reduziert.

Es versteht sich, dass auch die beiden Motoren (11, 11') gemäss Fig. 3 in Dreieckschaltung gemäss Fig. 2 betrieben werden könnten. Mit Abstrichen in ihrer Leistungsfähigkeit kann die Schaltung auch mit 2 getrennten Motoraktivitäten in einem Motorgehäuse, mit den 2 Läufern auf einer gemeinsamen Welle montiert, realisiert werden.

Eine weitere wesentliche Idee der Erfindung ist es, den 1. Stromrichter (2, 2'), der bei Wechselspannungsbetrieb als Gleichrichter wirkt, bei Gleichspannungsbetrieb als 2. Antriebsstromrichter bzw. Wechselrichter einzusetzen. Die beiden Antriebsstromrichter (2, 8) bzw. (2', 8') müssen bei Gleichspannungsbetrieb je ein 3phasiges Spannungssystem erzeugen; beide Spannungssysteme sind um einen Phasenwinkel ($\phi$) von vorzugsweise 30° el. gegeneinander versetzt.

Durch die versetzte Taktung der Wechselrichter wird bei Gleichspannungsbetrieb im Gleichspannungszwischenkreis (ZK) eine Reduktion der Netzrückwirkungen erreicht.

Die Motorwicklung (MW1, MW2) kann natürlich auch in mehr als 2 Wicklungssysteme aufgeteilt werden. Dementsprechend müssten dann mehr als 2 Antriebsstromrichter eingesetzt werden. Dadurch lässt sich die Mehrsystemfähigkeit auf kleinere Netz-Gleichspannungen ausdehnen.

Soll sich die Mehrsystemfähigkeit auf weitere Netzwechselspannungen, z. B. 25 kV, erstrecken, so sind Netztransformatoren mit anderen Übesetzungsverhältnissen zu wählen.

Anstelle einer elektrischen Maschine (11, 11') könnte auch ein nicht dargestellter Transformator vorgesehen sein, der z. B. an ein anderes Wechselstromnetz angeschlossen ist und als Wechselstromverbraucher der Energieübertragung dient.

**Patentansprüche**

1. Verfahren zur Umformung elektrischer Energie,
    a) bei dem elektrische Energie aus mindestens einer Energiequelle (1, 12) mit einer vorgebbaren Spannung
    b) über mindestens einen Netzstromrichter bzw. 1. Stromrichter (2, 2') und mindestens einen Verbraucherstromrichter bzw. 2. Stromrichter (8, 8')
    c) in elektrische Energie einer elektrischen Anlage oder eines Wechselstromverbrauchers (11, 11') umgeformt wird,
    d) der je Wechselstromphase (R, S, T) mindestens eine stromführende Wicklung (MW1, MW2) aufweist,
dadurch gekennzeichnet,
    e) dass vor einem Umschalten von einer Energiequelle (12) mit einer vorgebbaren Wechselspannung (U3) auf eine Energiequelle (1) mit einer vorgebbaren Gleichspannung (U1, U2)
    f) die mindestens eine stromführende Wicklung je Wechselstromphase (R, S, T) in mehrere galvanisch getrennte Teilwicklungen (MW1, MW2) aufgeteilt wird,
    g) dass die unterschiedlichen Teilwicklungen (MW1, MW2) von unterschiedlichen Stromrichtern (2, 2', 8, 8') gespeist werden,
    h) dass vor einem Umschalten von einer Energiequelle (1) mit einer vorgebbaren Gleichspannung (U1, U2) auf eine Energiequelle (12) mit einer vorgebbaren Wechselspannung (U3)
    i) die galvanisch getrennten Teilwicklungen (MW1, MW2) des mindestens einen Wechselstromverbrauchers (11, 11') je Wechselstromphase (R, S, T) elektrisch in Reihe geschaltet
    j) und von dem mindestens einen 1. Stromrichter (2, 2') getrennt werden und
    k) dass mindestens ein 1. Stromrichter (2, 2') von einem Betrieb als Verbraucherstromrichter auf einen Betrieb als Netzstromrichter umgeschaltet wird.

2. Verfahren nach Anspruch 1, dadurch gekennzeichnet,
    a) dass vor einem Umschalten von einer Energiequelle (1) mit einer vorgebbaren 1. Gleichspannung (U1) auf eine Energiequelle (1) mit einer vorgebbaren 2. Gleichspannung (U2), die höher als die 1. Gleichspannung (U1) ist,
    b) die mit unterschiedlichen Teilwicklungen (MW1, MW2) der mindestens einen stromführenden Wicklung (MW1, MW2) des mindestens einen Wechselstromverbrauchers (11, 11') wechselstromseitig in Verbindung stehenden Stromrichter (2, 2', 8, 8') von gleichspannungsseitiger Parallelschaltung auf gleichspannungsseitige Reihenschaltung umgeschaltet werden und
    c) dass vor einem Umschalten von einer Energiequelle (1) mit der vorgebbaren 2. Gleichspannung (U2) auf eine Energiequelle (1) mit der vorgebbaren 1. Gleichspannung (U1), die niedriger als die 2. Gleichspannung (U2) ist,
    d) die mit unterschiedlichen Teilwicklungen (MW1, MW2) der mindestens einen stromführenden Wicklung (MW1, MW2) des mindestens einen Wechselstromverbrauchers (11, 11') wechselstromseitig in Verbindung stehenden Stromrichter (2, 2', 8, 8') von gleichspannungsseitiger Reihenschaltung auf gleichspannungsseitige Parallelschaltung umgeschaltet werden.

3. Verfahren nach Anspruch 1 oder 2, dadurch gekennzeichnet, dass bei einer Energiespeisung aus einer Gleichspannungsquelle (1) unterschiedliche Teilwicklungen (MW1, MW2) zur Reduzierung von Netzrückwirkungen mit einer gegenseitigen Phasenverschiebung (ϕ) der Ausgangsspannung der unterschiedlichen Stromrichter (2, 2', 8, 8') betrieben werden.

4. Schaltung zur Umformung elektrischer Energie
    a) mit mindestens einem 1. Stromrichter (2, 2') und
    b) mindestens einem 2. Stromrichter (8, 8'),
    c) welcher 2. Stromrichter (8, 8') wechselstromseitig mit mindestens einer elektrischen Anlage oder mindestens einem Wechselstromverbraucher (11, 11') in Verbindung steht,
    d) mit mindestens einer Wechselspannungsquelle (Tr1, Tr2),
    e) die über eine 1. Schalteinrichtung (S1) mit mindestens einem Wechselstromanschluss des mindestens einen 1. Stromrichters (2, 2') elektrisch in Verbindung steht,
    dadurch gekennzeichnet,
    f) dass der mindestens eine Wechselstromverbraucher (11, 11') je Wechselstromphase (R, S, T) mehrere elektrisch voneinander trennbare stromführende Wicklungen bzw. Teilwicklungen (MW1, MW2) aufweist,
    g) welche über eine 3. Schalteinrichtung (S3, S3', S3'') elektrisch in Reihe schaltbar sind, und
    h) dass der mindestens eine Wechselstromanschluss des mindestens einen 1. Stromrichters (2, 2') über eine 2. Schalteinrichtung (S2) mit einer 1. Anschlusseite der 3. Schalteinrichtung (S3, S3', S3'') in Verbindung steht.

5. Schaltung nach Anspruch 4, dadurch gekennzeichnet,
    a) dass unterschiedliche Teilwicklungen (MW1, MW2) an Wechselstromanschlüsse unterschiedlicher Stromrichter (2, 2' 8, 8') anschliessbar sind und
    b) dass die wechselstromseitig an einen Wechselstromverbraucher (11, 11') anschliessbaren Stromrichter (2, 2', 8, 8') gleichstromseitig über mindestens eine Umschalteinrichtung (S5, S6) von Parallelschaltung auf Reihenschaltung und umgekehrt umschaltbar sind.

6. Schaltung nach Anspruch 4 oder 5, dadurch gekennzeichnet, dass zur Stern- und/oder Dreieckschaltung der stromführenden Wicklungen (MW1, MW2) je Wechselstromverbraucher (11, 11') mindestens eine 4. Schalteinrichtung (S4, S4'; S4'') mit einer 2. Anschlussseite der 3. Schalteinrichtung (S3, S3', S3'') in Verbindung steht oder in Verbindung bringbar ist.

7. Schaltung nach einem der Ansprüche 4 bis 6, dadurch gekennzeichnet, dass die beiden Anschlusseiten der Eingangsfilterdrossel (L1) an Umschaltkontakte einer Umschalteinrichtung (S7) angeschlossen sind, deren Sammelkontakt mit einem 1. Gleichspannungspol (3) des mindestens einen 1. Stromrichters (2) in Verbindung steht.

8. Schaltung nach einem der Ansprüche 4 bis 7, dadurch gekennzeichnet,
    a) dass der mindestens eine Wechselstromverbraucher eine elektrische Maschine (11, 11') ist und
    b) dass die Teilwicklungen (MW1, MW2) Statorwicklungen dieser Maschine sind.

**Claims**

1. Method for converting electrical energy,
    a) in which electrical energy from at least one energy source (1, 12) with a prescribable voltage is converted
    b) via at least one line-commutated converter or 1st power converter (2, 2') and at least one load power converter or 2nd power converter (8, 8')
    c) into electrical energy of an electrical installation or of an AC load (11, 11')
    d) which has at least one current-carrying winding (MW1, MW2) per AC phase (R, S, T),
    characterized
    e) in that before switching over from an energy source (12) with a prescribable AC voltage (U3) to an energy source (1) with a prescribable DC voltage (U1, U2)
    f) the at least one current-carrying winding per AC phase (R, S, T) is divided into a plurality of electrically isolated part windings (MW1, MW2),
    g) in that the different part windings (MW1, MW2) are fed from different power converters (2, 2', 8, 8'),
    h) in that before switching over from an energy source (1) with a prescribable DC voltage (U1, U2) to an energy source (12) with a prescribable AC voltage (U3)

i) the electrically isolated part windings (MW1, MW2) of the at least one AC load (11, 11') per AC phase (R, S, T) are connected electrically in series

j) and are isolated from the at least one 1st power converter (2, 2'), and

k) in that at least one 1st power converter (2, 2') is switched over from operation as load power converter to operation as line-commutated converter.

2. Method according to Claim 1, characterized

a) in that before switching over from an energy source (1) with a prescribable 1st DC voltage (U1) to an energy source (1) with a prescribable 2nd DC voltage (U2) which is higher than the 1st DC voltage (U1),

b) the power converters (2, 2', 8, 8') connected on the AC side to different part windings (MW1, MW2) of the at least one current-carrying winding (MW1, MW2) of the at least one AC load (11, 11') are switched over from parallel connection on the DC voltage side to series connection on the DC voltage side, and

c) in that before switching over from an energy source (1) with the prescribable 2nd DC voltage (U2) to an energy source (1) with the prescribable 1st DC voltage (U1) which is lower than the 2nd DC voltage (U2),

d) the power converters (2, 2', 8, 8') connected on the AC side to different part windings (MW1, MW2) of the at least one current-carrying winding (MW1, MW2) of the at least one AC load (11, 11') are switched over from series connection on the DC voltage side to parallel connection on the DC voltage side.

3. Method according to Claim 1 or 2, characterized in that in the case of energy being supplied from a DC voltage source (1), different part windings (MW1, MW2) are operated with a mutual phase shift $(\phi)$ of the output voltage of the different power converters (2, 2', 8, 8') in order to reduce system perturbation.

4. Circuit for converting electrical energy,

a) having at least one 1st power converter (2, 2') and

b) at least one 2nd power converter (8, 8'),

c) which 2nd power converter (8, 8') is connected on the AC side to at least one electrical installation or at least one AC load (11, 11'),

d) and having at least one AC voltage source (Tr1, Tr2),

e) which is electrically connected via a 1st break device (S1) to at least one AC terminal of the at least one 1st power converter (2, 2'),

characterized

f) in that the at least one AC load (11, 11') per AC phase (R, S, T) has a plurality of current-carrying windings or part windings (MW1, MW2) which can be electrically isolated from one another

g) and which can be connected electrically in series via a 3rd break device (S3, S3', S3''), and

h) in that the at least one AC terminal of the at least one 1st power converter (2, 2') is connected via a 2nd break device (S2) to a 1st terminal side of the 3rd break device (S3, S3', S3'').

5. Circuit according to Claim 4, characterized

a) in that different part windings (MW1, MW2) can be connected to AC terminals of different power converters (2, 2', 8, 8'), and

b) in that the power converters (2, 2', 8, 8') which can be connected on the AC side to an AC load (11, 11') can be switched over on the DC side from parallel connection to series connection, and vice versa, by means of at least one switchover device (S5, S6).

6. Circuit according to Claim 4 or 5, characterized in that for the purpose of star and/or delta connection of the current-carrying windings (MW1, MW2) at least one 4th break device (S4, S4'; S4'') is connected, or can be connected, per AC load (11, 11') to a 2nd terminal side of the 3rd break device (S3, S3', S3'').

7. Circuit according to one of Claims 4 to 6, characterized in that the two terminal sides of the input filter inductor (L1) are connected to changeover contacts of a switchover device (S7) whose bus contact is connected to a 1st DC pole (3) of the at least one 1st power converter (2).

8. Circuit according to one of Claims 4 to 7, characterized

a) in that the at least one AC load is an electrical machine (11, 11') and

b) in that the part windings (MW1, MW2) are stator windings of this machine.

## Revendications

1. Procédé pour la transformation de l'énergie électrique,

    a) pour lequel l'énergie électrique est transformée à partir d'au moins une source d'énergie (1, 12) avec une tension pouvant être pré-déterminée

    b) par l'intermédiaire d'au moins un convertisseur de courant du secteur ou d'un 1er convertisseur de courant (2, 2') et d'au moins un convertisseur de courant du récepteur ou d'un 2ème convertisseur de courant (8, 8')

    c) en énergie électrique d'une installation électrique ou d'un récepteur à courant alternatif (11, 11'),

    d) présentant au moins un enroulement conducteur de courant (MW1, MW2) pour chaque phase de courant alternatif (R, S, T),

        caractérisé par le fait

    e) qu'avant une commutation à partir d'une source d'énergie (12) avec une tension alternative pouvant être pré-déterminée (U3) à une source d'énergie (1) avec une tension continue pouvant être pré-déterminée (U1, U2)

    f) l'enroulement d'au moins un conducteur de courant pour chaque phase de courant alternatif (R, S, T) est partagé en plusieurs enroulements partiels galvaniquement séparés (MW1, MW2),

    g) de façon que des enroulements partiels différents (MW1, MW2) soient alimentés par des convertisseurs différents (2, 2', 8, 8'),

    h) et qu'avant une commutation à partir d'une source d'énergie (1) avec une tension continue pouvant être pré-déterminée (U1, U2) à une source d'énergie (12) avec une tension alternative pouvant être pré-déterminée (U3)

    i) les enroulements partiels galvaniquement séparés (MW1, MW2) d'au moins un récepteur de courant alternatif (11, 11') pour chaque phase de courant alternatif (R, S, T) sont branchés en série

    j) et qu'au moins un premier convertisseur de courant (2, 2') est branché séparément de lui et

    k) qu'au moins un 1er convertisseur de courant (2, 2') est commuté d'une marche comme convertisseur de récepteur pour passer en marche comme convertisseur de réseau.

2. Procédé selon la revendication 1, caractérisé par le fait

    a) qu'avant une commutation à partir d'une source d'énergie (1) d'une 1ère tension continue pouvant être pré-déterminée (U1) à une source d'énergie (1) d'une 2ème tension continue pouvant être pré-déterminée (U2), qui est plus élevée que la 1ère tension continue (U1),

    b) les convertisseurs de courant (2, 2', 8, 8') se trouvant en liaison, côté courant alternatif, avec des enroulements partiels différents (MW1, MW2) d'au moins un enroulement conducteur de courant (MW1, MW2) d'au moins un récepteur de courant alternatif (11, 11'), sont commutés du branchement en parallèle côté tension continue au branchement en série côté tension continue et

    c) qu'avant une commutation à partir d'une source d'énergie (1) avec la 2ème tension continue pouvant être pré-déterminée (U2) à une source d'énergie (1) avec la 1ère tension continue pouvant être pré-déterminée (U1), qui est plus faible que la 2ème tension continue (U2),

    d) les convertisseurs de courant (2, 2', 8, 8') se trouvant en liaison, côté courant alternatif, avec des enroulements partiels différents (MW1, MW2) d'au moins un enroulement conducteur de courant (MW1, MW2) d'au moins un récepteur de courant alternatif (11, 11'), sont commutés du branchement en série côté tension continue au branchement en parallèle côté tension continue.

3. Procédé selon la revendication 1 ou 2, caractérisé par le fait que, pour une alimentation en énergie à partir d'une source de tension continue (1), des enroulements partiels différents (MW1, MW2) sont exploités pour la réduction des réactions du réseau avec un décalage de phase ($\phi$) de la tension de sortie des différents convertisseurs (2, 2', 8, 8').

4. Branchement pour la transformation de l'énergie électrique

    a) avec au moins un 1er convertisseur de courant (2, 2') et

    b) au moins un 2ème convertisseur de courant (8, 8'),

    c) ce 2ème convertisseur de courant (8, 8') se trouvant en liaison, côté courant alternatif, avec au moins une installation électrique ou au moins un récepteur de courant alternatif (11, 11'),

    d) avec au moins une source de tension alternative (Tr1, Tr2),

    e) se trouvant en liaison électrique par l'intermédiaire d'un 1er dispositif de commutation (S1) avec au moins une connexion de courant alternatif d'au moins un 1er convertisseur de courant (2, 2') caractérisé par le fait,

f) qu'au moins un récepteur de courant alternatif (11, 11') pour chaque phase de courant alternatif (R, S, T) présente plusieurs enroulements ou enroulements partiels conducteurs de courant (MW1, MW2) électriquement séparables les uns des autres,

g) pouvant être branchés électriquement en série par l'intermédiaire d'un 3ème dispositif de commutation (S3, S3', S3''), et

h) qu'au moins une connexion de courant alternatif d'au moins un 1er convertisseur de courant (2, 2') se trouve en liaison avec un 1er côté de connexion du 3ème dispositif de commutation (S3, S3', S3'') par l'intermédiaire d'un 2ème dispositif de commutation (S2).

5. Branchement selon la revendication 4, caractérisé par le fait

a) que des enroulements partiels différents (MW1, MW2) peuvent être connectés à des connexions de courant alternatif de convertisseurs de courant différents (2, 2', 8, 8') et

b) que les convertisseurs de courant (2, 2', 8, 8') peuvent être branchés, côté courant alternatif, à un récepteur de courant alternatif (11, 11') et, côté courant continu, sont commutables pour passer du branchement en parallèle à celui en série ou inversement, par l'intermédiaire d'au moins un dispositif de commutation (S5, S6).

6. Branchement selon la revendication 4 ou 5, caractérisé par le fait que, pour le branchement étoile et/ou triangle des enroulements conducteurs de courant (MW1, MW2), pour chaque récepteur de courant alternatif (11, 11'), au moins un 4ème dispositif de commutation (S4, S4'; S4'') se trouve en liaison avec un 2ème côté de connexion du 3ème dispositif de commutation (S3, S3', S3'') ou peut y être amené.

7. Branchement selon l'une des revendications 4 à 6, caractérisé par le fait que les deux côtés de connexion de la bobine de filtrage d'entrée (L1) sont reliés aux contacts de commutation d'un dispositif de commutation (S7) dont le contact central se trouve en liaison avec un 1er pôle de tension continue (3) d'au moins un 1er convertisseur de courant (2).

8. Branchement selon l'une des revendications 4 à 7, caractérisé par le fait

a) qu'au moins un récepteur de courant alternatif est une machine électrique (11, 11') et

b) que les enroulements partiels (MW1, MW2) sont des enroulements du stator de cette machine.

Fig.1

Fig.2

Fig.3